# FASCICULE DE BREVET EUROPEEN

(11) **EP 0 928 409 B1**
(45) Date de publication et mention de la délivrance du brevet: **05.12.2001**
(21) Numéro de dépôt: 97940220.3
(22) Date de dépôt: 11.09.1997
(51) Int. Cl.: G01B 5/14, G01B 5/012

(54) **DISPOSITIF DE CONTROLE DE LA POSITION DE POINTS SUR UNE PIECE, NOTAMMENT DE LA POSITION DE CENTRES DE TROUS REALISES DANS UNE PIECE, EN PARTICULIER UNE TOLE**
VORRICHTUNG ZUM PRÜFEN DER LAGE VON PUNKTEN EINES WERKSTÜCKS, INSBESONDERE DER LAGE VON LOCHZENTREN IN EINER BLECHPLATTE
DEVICE FOR CONTROLLING THE POSITION OF POINTS ON A PART, IN PARTICULAR THE POSITION OF HOLE CENTRES MADE IN A PART, PARTICULARLY A SHEET METAL

(30) Priorité: 26.09.1996 FR 9611706
(43) Date de publication de la demande: 14.07.1999
(73) Titulaire: Groupement Etudes Mecaniques et Controles, 94130 Norgent sur Marne (FR)
(72) Inventeur: LE BAIL, Jacques, F-77630 Barbizon (FR)
(74) Mandataire: Michardière, Bernard
(86) Numéro de dépôt international: FR9701606
(87) Numéro de publication internationale: WO9813662

(56) Documents cités:
- WO-A-80/00872
- DE-A- 3 701 730
- DE-C- 808 166
- DE-C- 922 492
- DE-U- 9 402 550
- GB-A- 1 559 003
- GB-A- 2 075 192
- US-A- 4 638 566
- US-A- 5 201 131

## Description

L'invention est relative à un dispositif de contrôle de la position de points sur une pièce, notamment de la position de centres de trous réalisés dans une pièce, en particulier une tôle, ce dispositif étant du genre de ceux qui comprennent un palpeur situé à l'extrémité d'un élément pour entrer en contact avec le point, ou le bord du trou, à contrôler et des moyens de repérage de la position du palpeur permettant de déduire la position du point contrôlé.

Le problème du contrôle de la position de points sur des pièces, notamment de la position de centres de trous réalisés dans des pièces de formes très diverses, et dont les dimensions peuvent être de l'ordre du mètre ou plus, est important, en particulier dans les industries mécaniques. En effet, de telles pièces sont généralement destinées à être intégrées dans des ensembles plus complexes avec utilisation des points ou des trous pour l'assemblage ou la mise en place de divers organes. C'est le cas en particulier dans l'industrie automobile , par exemple pour les éléments de carrosserie. De l'exactitude de 1' emplacement de trous vont dépendre la rapidité et la précision des opérations ultérieures de montage ou d'assemblage. Le document US-A-4 638 566 concerne un appareil pour mesurer l'angle formé entre l'axe d'un trou réalisé dans une pièce mince et la perpendiculaire au plan moyen de cette pièce au niveau du trou.

Le problème du contrôle est difficile car les points à contrôler, notamment des centres de trous, peuvent se trouver sur une surface ayant une orientation quelconque.

L'invention a pour but, surtout, de fournir un dispositif de contrôle qui , en dépit de ces difficultés, présente une grande fiabilité, assure une bonne précision de contrôle, tout en restant d'un coût acceptable. On souhaite en outre que le dispositif de contrôle soit d'une utilisation pratique et permette d'effectuer rapidement les contrôles.

L'invention vise aussi à fournir un dispositif de contrôle qui soit autonome, c'est-à-dire qu'un même dispositif permette de contrôler plusieurs points ou centres de trous sur une même pièce.

Selon l'invention, un dispositif de contrôle de la position de points sur une pièce, notammment de centres de trous réalisés dans une pièce, en particulier une tôle, du genre défini précédemment, est caractérisé par le fait que l'élément portant le palpeur est articulé dans une zone intermédiaire sur un organe propre à être engagé de manière amovible dans l'alésage d'un canon de guidage installé dans une position de référence, une partie de l'élément opposée au palpeur coopérant avec un moyen de mesure des déplacements de cette partie relativement à l'organe.

Un tel dispositif de contrôle est autonome puisqu'il pourra être introduit successivement dans les canons de guidage installés en correspondance à chaque point à contrôler.

Avantageusement, le palpeur comporte, pour entrer en contact avec le point ou le bord du trou à contrôler, une calotte sphérique. Cette calotte sphérique est centrée sur l'axe géométrique de l'élément . Le rayon de la calotte sphérique est supérieur à celui du trou.

Selon une première possibilité, l'élément portant le palpeur est constitué par une tige, et l'organe sur lequel est articulée cette tige est constitué par un manchon propre à être engagé de manière amovible dans l'alésage d'un canon de guidage, la tige étant engagée en partie dans le manchon.

Avantageusement, la tige portant le palpeur est montée coulissante dans le manchon et est sollicitée élastiquement pour que le palpeur s'applique contre le point ou le bord du trou à contrôler.

La tige peut être sollicitée élastiquement par un ressort de compression monté autour d'une partie de la tige et prenant appui respectivement contre un élément solidaire de la tige et contre une zone du manchon de manière à pousser la tige vers le point ou le bord du trou à contrôler.

L'articulation de la tige comprend une portée formée par une zone sphérique en saillie radiale autour de la tige, centrée sur l'axe géométrique de la tige et propre à pivoter dans un alésage, de même diamètre, du manchon .

La partie de la tige opposée au palpeur peut comporter une portée en zone sphérique, en saillie radiale autour de cette tige, et en appui contre une touche d'un appareil de mesure du déplacement de cette portée dans une direction.

L'appareil de mesure peut être constitué par un comparateur micrométrique disposé de manière à mesurer les déplacements de la portée suivant une direction orthogonale à l'axe de la tige .

Avantageusement, l'organe est monté rotatif autour de son axe dans le canon de guidage, et des moyens de positionnement entre l'organe, en particulier un manchon, et le canon sont prévus pour permettre une mesure de contrôle dans deux directions , en particulier deux directions orthogonales.

Les moyens de positionnement peuvent comprendre, sur le canon de guidage , un pion décalé radialement par rapport à l'axe du canon et en saillie longitudinale, tandis que du côté du manchon deux pattes en saillie radiale, décalées angulairement, sont prévues et munies de portées assurant, par coopération avec le pion un changement de position angulaire, en particulier de 90°, du manchon relativement au canon .

Le dispositif de contrôle peut comprendre un manchon auxiliaire destiné à être monté dans le même canon de guidage et muni d'une broche décalée radialement mais parallèle à l'axe du manchon, cette broche étant montée coulissante et sollicitée élastiquement pour palper la paroi entourant un trou à contrôler, lorsque ce manchon auxiliaire est monté dans le canon de guidage, des moyens de mesure des déplacements de la broche étant prévus pour permettre de déduire l'orientation de la surface de la paroi entourant le trou.

Le dispositif de contrôle peut aussi comprendre une jauge de référence reproduisant la géométrie du dispositif de contrôle pour être montée dans le canon de guidage et pour permettre de vérifier la position du canon avant d'entamer les opérations de contrôle.

Des moyens sont avantageusement prévus sur le manchon pour limiter le pivotement de l'axe de la tige dans un seul plan, en particulier pour le contrôle de trous oblongs.

Selon une deuxième possibilité, dans le dispositif de contrôle, l'élément portant le palpeur est constitué par une enveloppe munie, à une extrémité, du palpeur traversé par un alésage, et l'organe sur lequel est articulé l'enveloppe est constitué par une tige traversant ledit alésage pour pénétrer dans l'enveloppe, cette tige comportant à l'intérieur de l'enveloppe une sphère d'articulation coopérant avec une surface conjuguée prévue à l'intérieur de l'enveloppe, l'extrémité de la tige située à l'intérieur de l'enveloppe coopérant avec un moyen de mesure des déplacements relatifs, la tige faisant saillie hors de l'enveloppe pour traverser un trou à contrôler, et s'engager dans l'alésage d'un canon de référence situé du côté de la pièce opposé au dispositif de contrôle.

L'enveloppe peut comporter une partie inférieure tronconique dont la petite base est solidaire d'une portion de sphère formant palpeur, et des moyens sont prévus pour maintenir la sphère de la tige, située à l'intérieur de l'enveloppe, au contact de la surface tronconique interne de la partie inférieure .

En variante, l'enveloppe est cylindrique et le palpeur est formé par une portion de sphère, solidaire de l'enveloppe, prolongée du côté opposé à l'enveloppe par un manchon cylindrique coaxial à l'enveloppe, comportant à son extrémité éloignée de l'enveloppe un renflement à surface extérieure sphérique, centrée sur l'axe géométrique du manchon, la tige traversant ce manchon , faisant saillie au-delà et étant munie à son extrémité d'une touche sphérique .

Un renvoi d'angle, notamment formé par une fourche en U renversé dont une extrémité latérale est articulée sur un pivot porté par l'enveloppe, est prévu dans cette enveloppe pour coopérer avec une extrémité de la tige et transformer un déplacement transversal en un déplacement suivant l'axe de la tige .

Quelle que soit la solution adoptée, des moyens sont avantageusement prévus pour maintenir l'axe de l'élément confondu avec celui de l'organe pour une mise à zéro.

Le palpeur est avantageusement constitué par un embout interchangeable monté à une extrémité de l'élément.

L'invention consiste, mises à part les dispositions exposées ci-dessus, en un certain nombre d'autres dispositions dont il sera plus explicitement question ci-après à propos d'un exemple de réalisation particulier décrit avec référence aux dessins ci-annexés, mais qui n'est nullement limitatif.

La Figure 1 de ces dessins est une coupe axiale verticale, avec parties en extérieur, d'un dispositif de contrôle selon l'invention, dont le manchon est installé dans un canon de guidage.

La Figure 2 est une vue simplifiée de gauche par rapport à la Figure 1.

La Figure 3 est une vue en élévation d'une jauge de référence pour la vérification de la position du canon de guidage.

La Figure 4 est une coupe axiale verticale d'un manchon auxiliaire avec broche pour palper la paroi entourant le trou.

La Figure 5 et une vue de gauche par rapport à la Figure 4.

La Figure 6 est un schéma explicatif des opérations de contrôle, avec représentation sommaire d' un canon de guidage équipé de la jauge de référence de la Figure 3, et d'une pièce munie de trous à contrôler.

Les Figures 7 et 8 sont des schémas simplifiés illustrant la coopération du palpeur et du bord d'un trou lors d'un contrôle.

La Figure 9 est une coupe partielle illustrant des moyens pour imposer le pivotement. de l'axe de la tige dans un seul plan.

La Figure 10 est une vue en plan d'une boutonnière.

La Figure 11 est un schéma d'un embout pour le contrôle de la position du centre d'un trou taraudé, en particulier la position du centre d'un écrou soudé sur une tôle.

La Figure 12 est une coupe axiale schématique à plus grande échelle, d'une variante d'un dispositif d'étalonnage.

La Figure 13 est une vue en élévation avec partie en coupe verticale d'une variante du dispositif selon l'invention, avec poignée de maintien.

La Figure 14 est une vue en élévation avec partie en coupe d'une variante de réalisation du dispositif selon l'invention, permettant un contrôle avec un canon de référence situé du côté de la pièce opposé au dispositif de contrôle.

La Figure 15 est une coupe suivant la ligne XV-XV de la Figure 14.

La Figure 16 est une coupe axiale, à plus grande échelle, d'un étalon pour le dispositif de la Figure 14.

La Figure 17 montre en coupe axiale avec partie en extérieur une autre variante du dispositif de contrôle, avec canon de référence situé du côté de la pièce opposé au dispositif de contrôle.

La Figure 18, enfin, est une coupe axiale d'un étalon pour le dispositif de contrôle de la Figure 17.

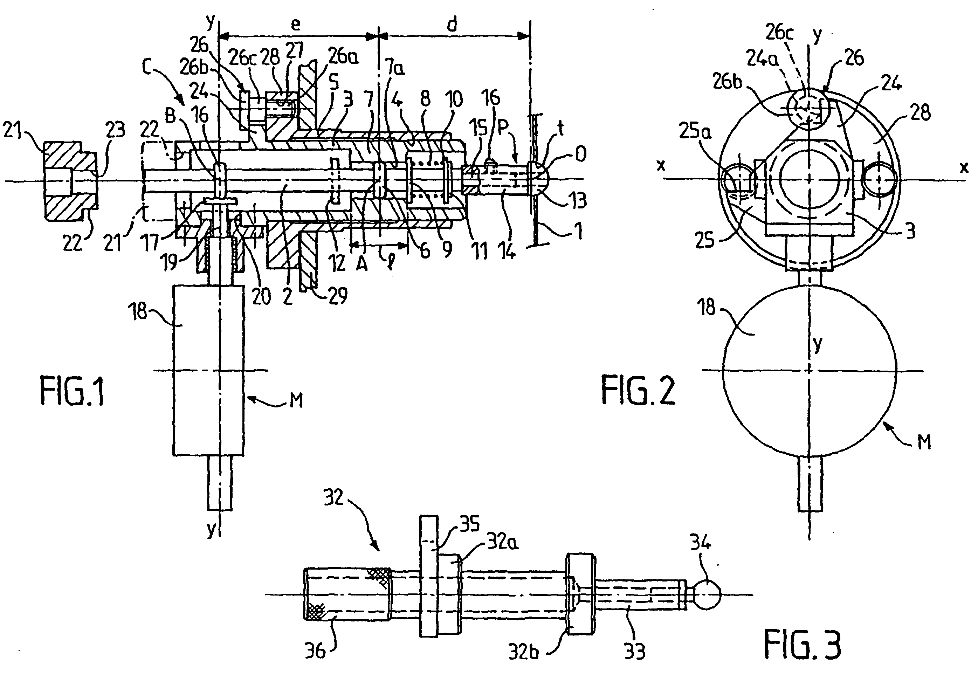

En se reportant aux dessins, notamment à la Figure 1, on peut voir un dispositif de contrôle C de la position de trous tels que le trou circulaire t réalisé dans une pièce mécanique 1, en particulier une tôle.

Le dispositif C comprend un palpeur P situé à l'extrémité d'une tige 2 cylindrique pour entrer en contact avec le bord du trou t à contrôler.

La tige 2 portant le palpeur P est articulée, dans une zone intermédiaire, sensiblement à mi-longueur, sur un manchon 3. Ce manchon 3 est engagé de manière amovible dans l'alésage 4 d'un canon de guidage 5 installé dans une position de référence. Vers son autre extrémité, la tige 2 coopère avec un moyen M pour la mesure des déplacements de cette extrémité.

L'articulation de la tige 2, dans la zone intermédiaire, est assurée par une portée 6 en zone sphérique en saillie radiale autour de la tige 2 et centrée en A sur l'axe géométrique de cette dernière. Cette portée 6 est ajustée dans l'alésage 7a ( de même diamètre que la portée) d'une partie rétrécie intérieurement 7 du manchon 3.

La tige 2 peut pivoter dans toutes les directions autour du centre A de la portée 6 ; en outre la tige 2 peut coulisser suivant sa direction axiale dans l'alésage 7a de la partie rétrécie 7 du manchon 3. Cette partie 7 a une longueur axiale l autorisant un déplacement en coulissement suffisant de la portée 6, tout en continuant à assurer l'articulation.

La tige 2 est sollicitée élastiquement dans le sens qui applique le palpeur P contre le bord du trou t ; dans le cas de la réalisation de la Figure 1, la tige 2 est sollicitée à se déplacer de la gauche vers la droite, suivant la direction axiale. La sollicitation élastique est réalisée de préférence à l'aide d'un ressort de compression en hélice 8 engagé autour de la tige 2 et situé du même côté de la partie rétrécie 7 que le palpeur P. A son extrémité éloignée du palpeur P, le ressort 8 est en appui contre une rondelle 9 traversée librement par la tige 2 ; cette rondelle 9 est elle-même en appui contre un épaulement frontal de la partie rétrécie 7 du manchon 3. A son autre extrémité, le ressort 8 est en appui contre une rondelle 10, traversée librement par la tige 2; cette rondelle 10 est en butée contre une bague fendue (ou circlip) 11 située, par rapport à la rondelle 10, du côté opposé au ressort 8, et ancrée dans une gorge annulaire de la tige 2.

La course de la tige 2 de la gauche vers la droite de la Figure 1, dans le sens de la sortie du palpeur P, est limitée par un pion 12 traversant un trou diamétral prévu dans la tige 2; le pion 12 fait saillie radialement de part et d'autre de cette tige . Ce pion 12 est situé du côté de la partie rétrécie 7 opposé au palpeur P, dans une zone de l'alésage du manchon 3 de plus grand diamètre. Le pion 12 fait saillie radialement d'une distance suffisante pour venir en butée contre l'épaulement arrière de la partie 7.

Le palpeur P comporte, à son extrémité, une calotte sphérique 13 centrée en O sur l'axé géométrique de la tige 2 et dont le diamètre est supérieur à celui des trous t à contrôler. La calotte sphérique 13 peut couvrir une demi-sphère, ou un peu plus comme illustré sur la Figure 1, et est de révolution autour de l'axe de la tige 2. De préférence, cette calotte 13 est prévue à l'extrémité d'un embout cylindrique 14 interchangeable. Cet embout 14 comporte un alésage dans lequel est engagée une partie d'extrémité 15 de diamètre réduit de la tige 2. Le blocage de l'embout 14 sur cette extrémité 15 est assuré par une vis de pression 16 orientée radialement.

On peut prévoir plusieurs types d'embouts 14 équipés de calottes sphériques 13 de diamètres différents afin de contrôler, avec un même dispositif, des trous t, t1... dont les diamètres peuvent fortement différer. On peut ainsi définir pour les embouts 14 et leurs calottes sphériques 13 des classes, par exemple une première classe correspondant à l'embout permettant le contrôle de trous dont le diamètre peut varier de 5 mm à 11,2 mm, une deuxième classe pour les diamètres supérieurs à ceux de la première classe, allant jusqu'à 18,2 mm etc.

La partie de la tige 2 située du côté de la portée 6 opposé au palpeur P est munie d'une autre portée 16 en zone sphérique, centrée en B sur l'axe géométrique de la tige 2, en saillie radiale autour de cette tige. La portée 16 est en appui contre une touche 17 d'un comparateur micrométrique 18 constituant le moyen de mesure M du déplacement de cette portée 16 dans une direction Y-Y orthogonale à l'axe du manchon 3. Le comparateur 18 est fixé à l'extérieur du manchon 3 de telle manière que son poussoir 19 portant la touche 17 soit orthogonal à l'axe géométrique de la tige 2. La touche 17 est constituée par une plaquette perpendiculaire à l'axe du poussoir 19 ; la dimension de la touche 17 parallèlement à l'axe de la tige 2 est suffisante pour que la portée 16 reste en appui contre cette touche 17 lors des coulissements possibles de la tige 2 dans le manchon 3. La fixation du comparateur 18 sur le manchon 3 est réalisée de manière démontable au niveau d'un trou 20 prévu dans le manchon et traversé par le poussoir 19.

La distance d entre le centre O de la calotte sphérique 13 et le centre A de la portée sphérique 6 est de préférence égale, ou sensiblement égale, à la distance e entre le centre A de la portée 6 et le centre B de la portée 16. De la sorte, comme expliqué plus loin, la mesure du déplacement de la portée 16 permet de mesurer directement l'écart de position du centre du trou t, par rapport à la position de référence, suivant la direction de coulissement du poussoir 19.

La mise en coïncidence de l'axe géométrique de la tige 2 avec l'axe géométrique du manchon 3 est obtenue à l'aide d'un bouchon 21 de centrage muni d'une portée cylindrique 22 et d'un alésage 23 concentrique. La portée 22 vient s'ajuster dans un alésage de même diamètre du manchon 3 tandis que l'alésage 23 de même diamètre que la tige 2 est traversé par cette dernière. Le bouchon 21 est mis en place ou retiré du manchon 3 par simple coulissement. Lorsque le bouchon 21 est en place, la tige 2 étant engagée dans l'alésage 23, il y a coïncidence entre l'axe de la tige 2 et celui du manchon 3 . Cette position correspond à un décalage nul , suivant la direction Y-Y , du centre d'un trou par rapport à l'axe du manchon 3 . Cette position permet donc la mise à zéro du comparateur 18 pour cette direction Y-Y.

Lors des contrôles, le bouchon 21 est retiré, comme illustré sur la Figure 1, de manière à permettre le débattement angulaire de la tige 2 autour du centre de pivotement A.

Le manchon 3 est monté rotatif autour de son axe dans le canon de guidage 5 et comporte, à sa périphérie, deux pattes 24, 25 (voir Figure 2) en saillie radiale. Ces pattes sont munies de portées planes orientées radialement 24a, 25a, formant respectivement une des faces de deux évidements en dièdre droit tournant leurs concavités l'une vers l'autre. Le plan moyen des pattes 24, 25 est orthogonal à l'axe du manchon 3. Un pion 26 est monté dans un trou 27 d'une collerette 28 du canon de guidage 5. Le pion 26 comporte une extrémité filetée 26a de plus petit diamètre vissée dans le trou taraudé 27, une tête 26b de plus grand diamètre et une portée cylindrique intermédiaire 26c avec laquelle peuvent coopérer les portées 24a, 25a. Avantageusement, plusieurs trous 27 distants de 90° sont prévus dans la collerette 28. Lorsqu'une patte 24,25 est en appui par sa portée 24a,25a contre la porté 26c du pion 26, cette patte est bloquée axialement , et avec elle le manchon 3, entre la collerette 28 et la tête 26b de plus grand diamètre du pion 26.

Les pattes 24, 25 avec leurs portées 24a, 25a sont disposées de telle sorte que la position angulaire du manchon 3 relativement au canon 5 est modifiée de 90° selon que la portée 24a coopère avec la partie droite du pion 26 ( Figure 2 ) ou que, après rotation du manchon 3 dans le sens d'horloge sur la Figure 2, la portée 25a coopère avec la partie gauche du pion 26 . Dans cette dernière position, l'axe du poussoir 19 se trouve alors dirigé suivant la direction X-X de la Figure 2 et le déplacement de la tige 2, mesuré par le comparateur 18, correspond à un décalage du centre du trou t suivant cette direction X-X.

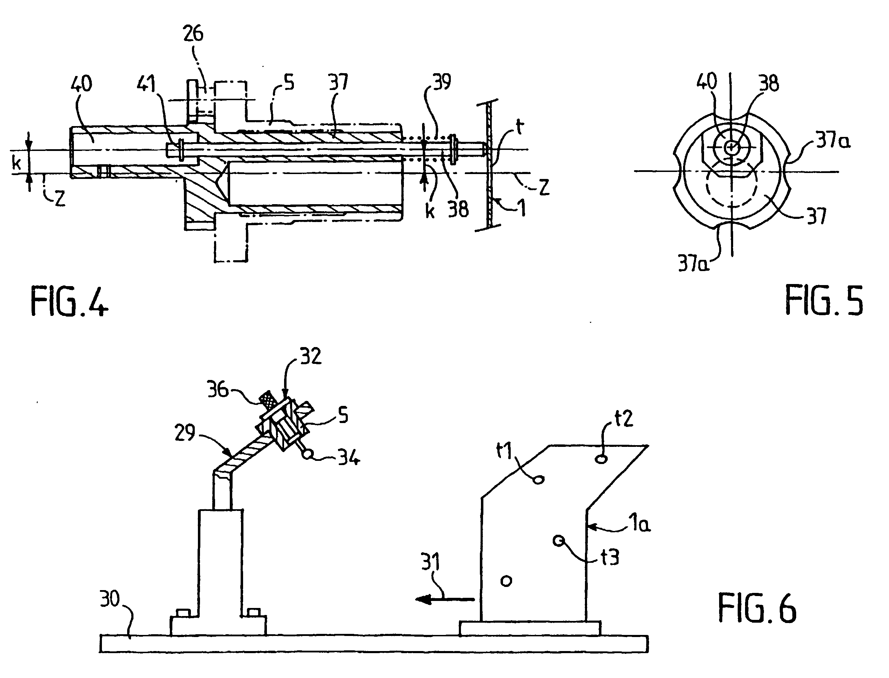

Le canon de guidage 5, comme illustré sur la Figure 6, est placé dans une position de référence en étant monté sur un support 29 lui-même fixé sur une plaque rigide 30 (ou marbre). Des repères de référence et des moyens de bridage (non représentés) sont prévus sur la plaque 30 pour fixer une pièce 1a comportant des trous circulaires t1,t2,t3... dont la position est à contrôler. La fixation de la pièce est réalisée selon . une position parfaitement définie vis-à-vis d'un système de coordonnées lié à la plaque 30. Dans la représentation schématique de la Figure 6, la pièce 1a sommairement représentée n'est pas encore installée dans la position de contrôle et est en cours de déplacement suivant la flèche 31 vers cette position.

Avant de procéder à un contrôle de position des trous de la pièce 1a, par exemple du trou t1 auquel est associé le support de référence 29, il convient de vérifier la position et l'orientation du canon 5 dans l'espace.

Pour cela, on prévoit une jauge de référence 32 (voir Figure 3) propre à se monter dans le canon de guidage 5. Cette jauge de référence 32 est formée d'une pièce rigide de révolution, avec deux portées périphériques cylindriques 32a, 32b, écartées axialement, de même diamètre que le diamètre interne du canon 5 ; ces portées 32a, 32b coopèrent avec les extrémités du canon 5 pour le centrage de la jauge 32 dans le canon. Cette jauge 32 comporte un prolongement coaxial 33, de plus faible diamètre, correspondant à l'embout 14, ce prolongement étant muni à son extrémité d'une sphère 34 centrée sur l'axe de la jauge 32. Une patte 35 semblable à la patte 24 est prévue contre la face de la portée 32a éloignée de l'extrémité 34. Un manche 36 , pour la manipulation de la jauge 32, est prévu à l'extrémité située à gauche sur la Figure 3.

Les dimensions de la jauge de référence 32 sont déterminées avec précision d'après les dimensions théoriques du dispositif de contrôle C de manière telle que , lorsque la jauge 32 est engagée dans le canon 5 comme illustré sur la Figure 4, le centre de la sphère 34 et l'orientation de l'axe géométrique du prolongement 33 aient les valeurs théoriques pour le contrôle, à condition que le canon 5 soit correctement positionné et orienté. La position du centre de la sphère 34 et l'orientation de l'axe géométrique du prolongement 33 sont déterminées par des moyens de palpage, non représentés, permettant de déduire les valeurs des coordonnées du centre de la sphère 34 et les angles définissant la direction de l'axe du prolongement 33 dans le système de coordonnées défini sur la plaque 30.

Le dispositif de contrôle comprend également un manchon auxiliaire 37 représenté sur la Figure 4, ayant même diamètre extérieur que le manchon 3 afin d'être monté, de manière semblable, dans le canon de guidage 5. Une broche 38 est montée coulissante dans un alésage décalé radialement par rapport à l'axe géométrique du manchon 37 et parallèle à cet axe. La broche 38 est poussée par un ressort 39 en appui à une extrémité contre le manchon 37 et à son autre extrémité contre une bague fendue ancrée dans la broche 38. L'extrémité de la broche 38 opposée au ressort 39 peut coulisser dans un alésage 40 d'un prolongement du manchon 37 décalé radialement. Une bague 41 est ancrée à l'extrémité de la broche pour la retenir contre le fond de l'alésage 40 sous l'action du. ressort 39. Les déplacements de la broche 38 en coulissement suivant son axe longitudinal sont captés par un comparateur non représenté ,semblable au comparateur 18, dont le poussoir est engagé dans l'alésage 40, en contact avec l'extrémité de la tige 38.

Le décalage radial k entre l'axe de la broche 38 et l'axe du manchon 37 est supérieur au rayon maximal des trous t à contrôler. Ainsi, lorsque le manchon 37 est mis en place dans le canon 5, l'extrémité située à droite, selon la représentation de la Figure 4, de la broche 38 vient au contact de la paroi entourant le trou t.

Le manchon auxiliaire 37 est muni de quatre échancrures de positionnement 37a, en arc de cercle, décalées angulairement de 90°, chacune étant propre à coopérer avec la portée 26c du pion 26, pour définir quatre positions de contrôle différentes décalées de 90°. Ceci permet de palper la paroi entourant le trou à contrôler en quatre points différents espacés de 90°. On peut en déduire l'inclinaison de cette paroi ainsi que l'orientation de l'axe Z-Z passant par le centre du trou t et orthogonal à la paroi dans laquelle ce trou débouche.

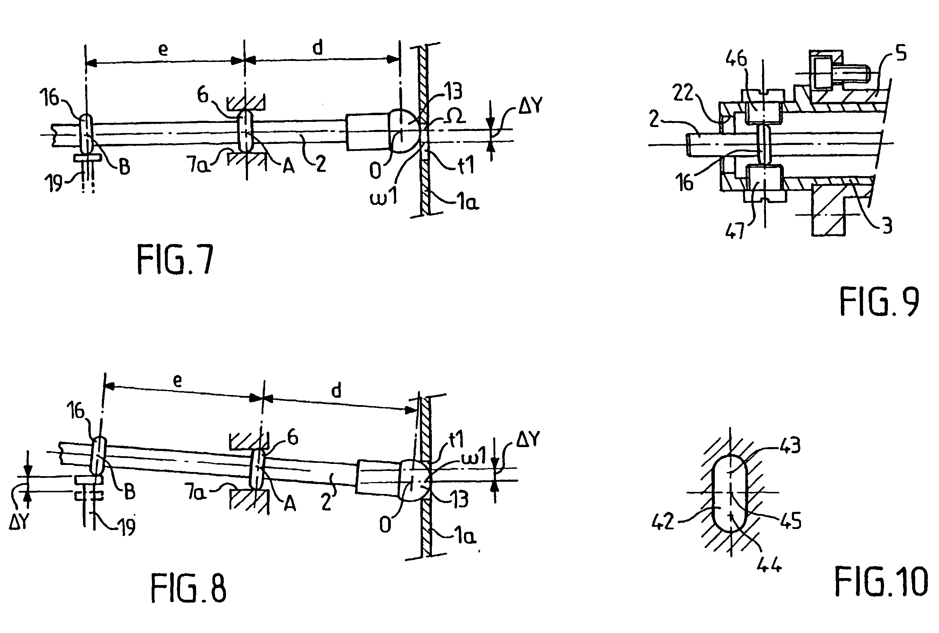

Il peut arriver d'avoir à contrôler des trous allongés tels que la boutonnière 42 représentée sur la Figure 10 . Cette boutonnière 42 comporte deux extrémités en demi-cercle de centres 43, 44, et deux bords rectilignes parallèles. Le centre de la boutonnière désigné par 45 est situé sur le segment 43-44 à mi-distance des extrémités. La position des centres 43, 44 des extrémités en demi-cercle peut être contrôlée directement avec le dispositif C dans la configuration de la Figure 2.

Pour contrôler la position du centre 45, on prévoit des moyens 46, 47 (Figure 9) pour limiter le pivotement de l'axe géométrique de la tige 2 dans un seul plan. Dans l'exemple considéré, les moyens 46, 47 sont constitués par deux bouchons diamétralement opposés vissés dans des trous taraudés du manchon 3 et venant emprisonner la portée 16 suivant la direction de l'axe des bouchons . Dans cet exemple de la Figure 9, l'axe géométrique de la tige 2 ne peut pivoter, autour du centre A de la portée 6 (Figure 1), que dans un plan perpendiculaire au plan de la Figure 9 et passant par l'axe de la tige 2.

Ceci étant, l'utilisation et le fonctionnement du dispositif de contrôle selon l'invention sont les suivants.

Pour une pièce 1a comportant plusieurs trous t1,t2,t3... à contrôler, pièce dont: on connaît les dimensions et cotes théoriques, on installe, sur la plaque 30 autant de supports 29 que de trous à contrôler, ces supports 29 étant positionnés en fonction de chaque trou. Chaque support est équipé d'un canon de guidage 5 dont la position doit correspondre aussi précisément que possible à la position théorique de référence. Avant de procéder à un contrôle, on effectue la vérification de la position et de l'orientation des canons 5 à l'aide de la jauge de référence 32 comme expliqué précédemment.

Lorsque cette vérification est terminée et est satisfaisante, on effectue ensuite le contrôle de chaque trou.

Par exemple, pour le trou t1 auquel correspond le support 29 et le canon 5 de la Figure 6, après avoir retiré la jauge 32 du canon 5, on introduit, dans ce canon, le manchon 3 équipé de la tige 2 et du comparateur 18, le bouchon 21 étant retiré.

On suppose, comme illustré sur la Figure 7, que le centre du trou t1 est décalé de la distance ΔY par rapport à la position théorique Ω qui correspond à l'intersection de l'axe géométrique du manchon 3 avec le plan moyen du trou t1.

Lorsque la calotte sphérique entre en contact avec le bord du trou t1, sous l'action de la poussée du ressort 8, la tige 2 du palpeur coulisse légèrement dans le manchon 3 et pivote autour du point A pour que la calotte sphérique 13 vienne en contact avec tout le bord du trou t1 suivant un cercle de la sphère, comme illustré sur la Figure 8. Lorsque le contact est ainsi établi suivant tout le bord du trou t1, le centre O de la calotte sphérique 13 se trouve sur une droite perpendiculaire au plan du trou t1 et passant par le centre ω1 de ce trou.

Le centre O s'est donc déplacé, suivant la direction Y-Y, de la valeur ΔY correspondant au décalage du centre ω1 du trou t1 par rapport à la position théorique Ω.

Ce déplacement est directement mesuré par le comparateur 18 puisque les bras de levier e, d de part et d'autre du point de pivotement A sont égaux.

Il est clair que si on le souhaite, on peut modifier le rapport de ces bras de levier, par exemple pour amplifier le déplacement au niveau du comparateur 18.

Après avoir effectué la mesure du décalage ΔY suivant une première direction, on fait tourner de 90° le manchon 3, avec son comparateur 18, autour de l'axe du canon 5 de manière à placer la patte 25 en appui contre le pion 26.

On effectue alors une deuxième lecture du comparateur 18 qui donne le décalage ΔX suivant la direction X-X orthogonale à Y-Y.

Pour compléter le contrôle, on peut ensuite, retirer le manchon 3 puis introduire le manchon auxiliaire 37 pour déterminer la position et l'orientation de la paroi entourant le trou t1.

Le dispositif de contrôle conforme à l'invention assure une grande fiabilité et une bonne autonomie puisque le même dispositif C peut être monté successivement dans les différents canons de guidage 5 associés aux différents trous t1,t2,t3... à contrôler. En outre, le même dispositif C peut servir à contrôler des trous de diamètres très différents par simple changement de l'embout 14.

La précision de contrôle peut être de l'ordre de cinq centièmes de millimètres.

Bien que la calotte sphérique 13 soit une solution préférée, on pourrait prévoir une extrémité de révolution autour de l'axe de la tige 2 ayant une forme autre que sphérique, par exemple une forme en paraboloïde de révolution ou en cône de révolution, mais la précision de mesure serait légèrement diminuée.

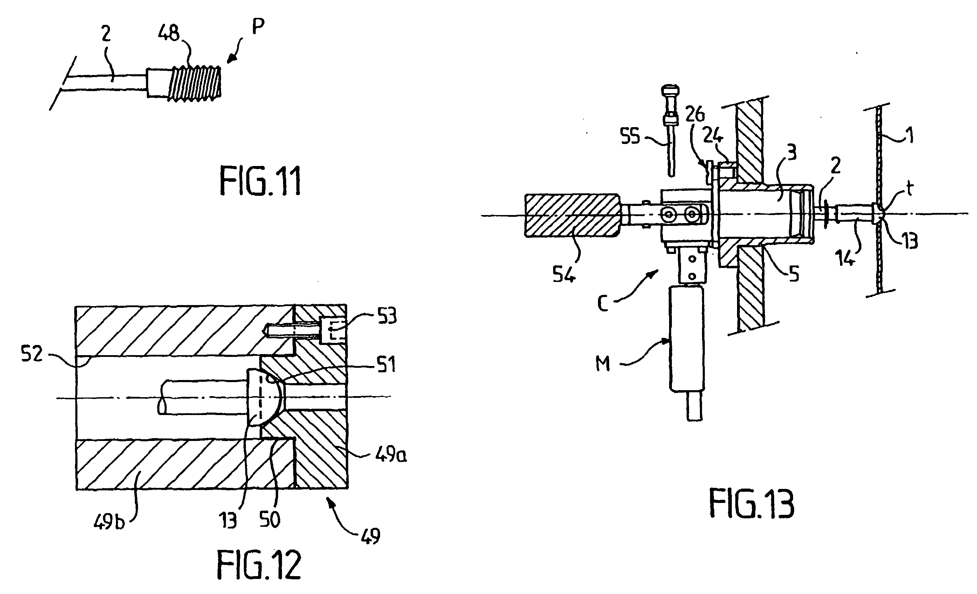

La Figure 11 montre un embout fileté 48 propre à être monté à l'extrémité de la tige 2 à la place de l'embout 14. La tige 2 est montée rotative dans le manchon 3 et peut être entraînée en rotation, autour de son axe, à partir de son extrémité opposée à l'embout 48. Cet embout 48 peut être vissé dans un trou taraudé, par exemple le trou d'un écrou (non représenté) soudé en une position déterminée sur une tôle. Il est ainsi possible de contrôler la position du centre de ce trou taraudé.

La Figure 12 montre un dispositif d'étalonnage 49 qui peut se substituer avantageusement au bouchon 21 décrit précédemment, pour la mise en coïncidence de l'axe géométrique de la tige 2 avec l'axe géométrique du manchon 3.

Le dispositif d'étalonnage 49 comporte une base 49a ayant un épaulement cylindrique 50 au centre duquel est prévue une portée tronconique 51. L'ensemble est réalisé pour qu'il y ait coïncidence, avec une précision élevée, entre l'axe géométrique de l'épaulement 50 et l'axe géométrique de la portée tronconique 51. Un manchon 49b, ayant un alésage 52 de même diamètre que l'épaulement 50, est engagé sur cet épaulement suivant un centrage précis, et est fixé de manière démontable à la base 49a par des vis 53. L'axe géométrique de l'alésage 52 coïncide donc avec l'axe géométrique de la portée 51. Le diamètre de l'alésage 52 est égal au diamètre extérieur du manchon 3.

Dans ces conditions, en engageant le manchon 3 dans cet alésage 52 et en appuyant la calotte sphérique 13 contre la portée 51, on définit une position relative de la tige 2 et du manchon 3 correspondant à une coïncidence de leurs axes géométriques . L'appareil de mesure M peut alors être réglé sur une valeur correspondant à un décalage nul.

Avec le dispositif d'étalonnage 49 on effectue le réglage à partir d'un contact établi directement sur le palpeur P ( calotte sphérique 13). Lorsque l'on souhaite vérifier la chaîne d'étalonnage, il suffit de contrôler la qualité du dispositif d'étalonnage 49 sans avoir à introduire dans la chaîne de référence l'ensemble du dispositif de contrôle C.

Par contre, lorsqu'on utilise pour l'étalonnage le bouchon 21 de la Figure 1, du fait que l'on intervient à l'extrémité de la tige 2 opposée au palpeur 13, lors d'un contrôle de l'étalonnage il faut introduire l'ensemble du dispositif C dans la chaîne de vérification, ce qui complique les opérations.

La Figure 13 montre une variante du dispositif C selon laquelle une poignée 54 est fixée sur le manchon 3 à l'extrémité opposée au palpeur 13. Cette poignée 54 facilite la manipulation de l'appareil.

Toutefois, la présence de cette poignée 54 peut gêner la réalisation du blocage de la tige 2 dans une direction, à l'aide des bouchons filetés 46, 47 illustrés sur la Figure 9, par exemple pour contrôler un trou en boutonnière.

Le blocage de la tige dans une direction peut alors être réalisé à l'aide de deux broches dont une seule 55 est visible sur la Figure 13, engagées dans des trous respectifs prévus de part et d'autre de la tige 2 de manière à venir tangenter extérieurement deux points diamétralement opposés de la tige. Cette tige 2 se trouve ainsi bloquée suivant une direction orthogonale à celle des broches 55, c'est-à-dire perpendiculaire au plan de la Figure 13. La tige 2 peut par contre osciller dans le plan de cette Figure 13, entre les broches 55.

Dans la description qui précède, on a considéré essentiellement le cas où l'appareil C sert à contrôler la position du centre d'un trou. Il est clair que l'appareil selon l'invention permet de contrôler la position d'un point quelconque autre que le centre d'un trou, ainsi que la position d'une face de référence d'une pièce. Pour cela, on vient appliquer le palpeur P,13 contre le point ou contre la face à contrôler.

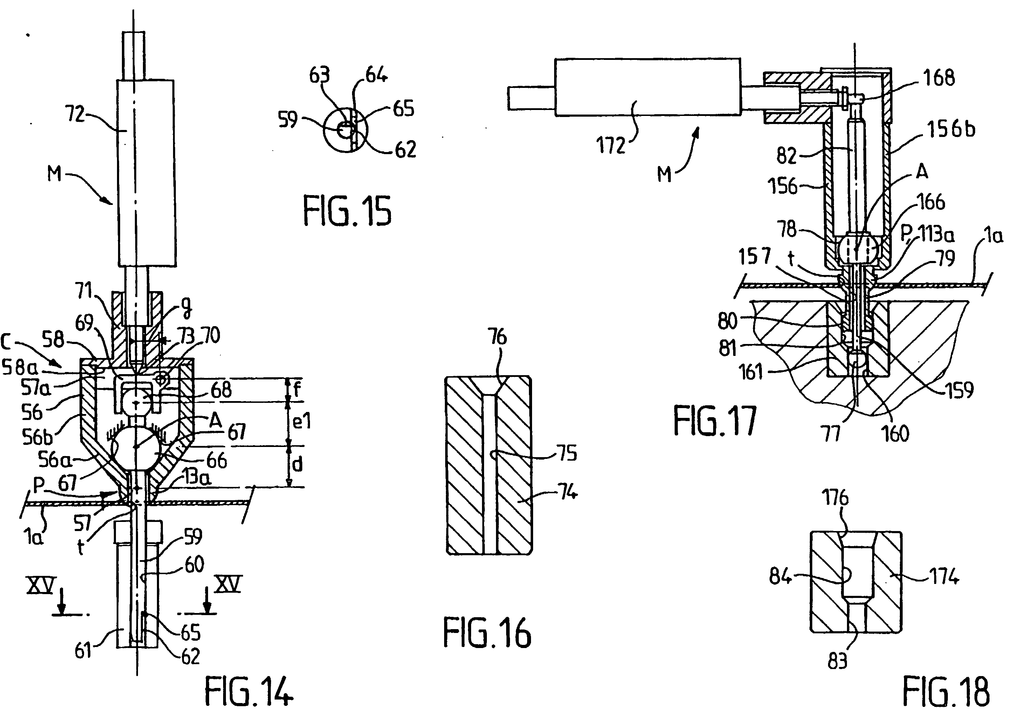

La Figure 14 montre une variante de l'appareil de contrôle C permettant d'utiliser des canons de référence situés du côté de la pièce la à contrôler opposés à l'appareil de mesure.

Le palpeur P,13a est situé à l'extrémité d'un élément formé par une enveloppe 56 comportant une partie inférieure tronconique dont la petite base est solidaire du palpeur P, 13a et une partie supérieure cylindrique 56b. Ce palpeur P est constitué par une portion de sphère 13a traversée par un alésage 57 diamétral coaxial à l'enveloppe 56. L'extrémité supérieure de la partie cylindrique 56b est ouverte. Un couvercle 58 ferme cette extrémité dans laquelle il est engagé et centré par une portée 58a.

Une tige 59 de diamètre calibré traverse l'alésage 57 et fait saillie, hors de l'enveloppe 56, de manière à traverser un trou t dont la position du centre est à contrôler . La tige 59 s'engage dans l'alésage 60 d'un canon de référence 61 qui est positionné, du côté de la tôle la opposé à l'enveloppe 56, par des moyens de support( non représentés ) de telle manière que son axe géométrique corresponde à la position théorique de l'axe géométrique du trou t.

L'extrémité inférieure de la tige 59 comporte deux méplats 62, 63 (Fig.15) constitués par des surfaces planes parallèles à l'axe de la tige, ces deux méplats 62, 63 étant à angle droit. Le canon 61 comporte, en partie basse, un perçage 64 (Fig.15) d'axe orthogonal à l'axe géométrique de l'alésage 60 et coupant cet alésage. Une goupille cylindrique 65 est engagée dans le perçage 64 et fait saillie, par une partie de sa surface cylindrique, dans l'alésage 60 pour coopérer avec l'un des méplats 62, 63. On définit ainsi deux positions angulaires, à angle droit, d'engagement possible de la tige 59 dans le canon 61. A ces deux positions correspondent deux mesures du décalage du centre du trou t, par rapport à la position théorique, dans deux directions orthogonales.

La tige 59 pénètre dans l'enveloppe 56 et comporte une sphère d'articulation 66, de préférence d'une seule pièce avec la tige 59. Le diamètre de la sphère 66 est nettement supérieur au diamètre de l'alésage 57 et cette sphère coopère avec la surface tronconique interne de la partie 56a pour définir une articulation autour du centre A de la sphère 66.

Des moyens sont prévus pour maintenir la sphère 66 au contact de la surface tronconique interne de la partie 56a.

Ces moyens peuvent être constitués par des ressorts de compression (non représentés) prenant appui à une extrémité contre une rondelle elle-même en appui contre une zone supérieure de la sphère 66, tandis que l'extrémité supérieure des ressorts de compression serait en appui contre le couvercle 58 fixé à l'enveloppe 56. Une telle solution présente toutefois un léger inconvénient dans la mesure où l'engagement serré de la tige 59 dans l'alésage 60 peut engendrer un début de coincement et une résistance à l'engagement supérieure à la force des ressorts. Il faut donc prévoir des ressorts exerçant une force relativement élevée, et il convient de vérifier que le contact entre la sphère 66 et la surface tronconique 56 est bien assuré au moment: du contrôle.

Une autre solution, préférée, consiste à prévoir une surface d'appui tronconique 67, schématiquement représentée sur la Figure 14, contre la zone supérieure de la sphère 66, cette surface d'appui 67 étant solidaire de l'enveloppe 56. La sphère 66 constitue ainsi une rotule emprisonnée, avec un jeu minimal, entre des surfaces d'appui qui autorisent la rotation de la sphère 66 autour de son centre A, mais interdisent tout déplacement en translation.

La tige 59 se prolonge au-delà de la sphère 66 et son extrémité supérieure est constituée par une partie cylindrique 68 de révolution, d'axe et de génératrices perpendiculaires au plan de la Figure 14. La partie 68 est engagée, pratiquement sans jeu, entre les branches parallèles à l'axe de la tige 59 d'une fourche 69 en U renversé. Une extrémité latérale, l'extrémité droite selon la Figure 14, de la partie transversale de la fourche 69 est articulée sur un pivot 70, d'axe orthogonal au plan de la Figure 14, porté par le couvercle 58. La fourche 69 constitue un renvoi d'angle permettant de transformer un déplacement transversal de la partie 68, suivant une direction orthogonale à l'axe de la tige 59, en un mouvement suivant l'axe de cette tige 59.

Les branches de la fourche 69 ont une dimension suffisante suivant la direction perpendiculaire au plan de la Figure 14 pour assurer ( par leur coopération avec les génératrices de la partie cylindrique 68) le maintien en rotation de la partie 68 et de la tige 59 relativement à l'enveloppe 56.

Le couvercle 58 comporte, du côté opposé à la tige 59, un manchon 71 dans lequel est monté un comparateur 72 dont la touche 73 traverse librement l'alésage du manchon 71 pour venir en appui contre la face supérieure de la base de la fourche 69, en un point situé sur l'axe géométrique de la tige 59.

De préférence la distance d entre le centre du palpeur sphérique 13a et le centre de la sphère 66 est égale à la distance el entre le centre de la sphère 66 et l'axe géométrique de la partie 68. Les bras de levier d, el étant ainsi égaux, le déplacement transversal de la tige 59 relativement au palpeur 13a est égal au déplacement relatif de la partie 68 relativement à l'enveloppe 56.

En outre, le renvoi d'angle constitué par la fourche 69 pivotante est prévu pour conserver les amplitudes de déplacement. Pour cela, la distance f entre l'axe géométrique du pivot 70 et la génératrice de contact de la partie 68 avec l'une des branches de la fourche 69 est égale à la distance g entre l'axe géométrique du pivot 70 et le point de contact de la touche 73 avec la fourche 69. Comme indiqué précédemment ce point de contact est situé sur l'axe géométrique de la tige 59.

Pour la mise à zéro du comparateur 72, un étalon 74 (Figure 16) est prévu. Cet étalon 74 est constitué par un manchon avec un alésage central 75 dont le diamètre intérieur est égal au diamètre extérieur de la tige 59. L'alésage 75 débouche à son extrémité supérieure dans un chanfrein tronconique 76 parfaitement concentrique. Lorsque la tige 59 de l'appareil C de la Figure 14 est engagée dans l'alésage 75 et que le palpeur 13a est centré dans la partie tronconique 76, le comparateur 72 doit être réglé pour afficher un décalage nul entre le centre du palpeur 13a et l'axe géométrique de l'alésage 75.

Une opération de contrôle de la position d'un point, notamment du centre d'un trou t, avec l'appareil C de la Figure 14 se déroule de la manière suivante.

La pièce la est positionnée, par des moyens non représentés, au-dessus de canons de référence, tels que 61. Chaque canon 61 est maintenu, par des moyens non représentés, de telle sorte que son axe géométrique corresponde à l'axe théorique souhaité pour le trou t associé à contrôler.

L'opérateur, du côté de la pièce la opposé au canon 61, maintient l'appareil C, par exemple par l'enveloppe 56, et fait traverser le trou t par la tige 59. L'opérateur engage cette tige 59 dans l'alésage 60 du canon 61 correspondant au trou t considéré. En fin d'engagement de la tige 59, un méplat 62 ou 63 vient au contact de la goupille 65 et définit une orientation déterminée de la tige 59 et de l'appareil C. L'engagement de la tige 59 se poursuit jusqu'à ce que le palpeur 13a vienne en appui contre la périphérie du trou t.

Si le centre du trou t est décalé par rapport à l'axe géométrique de référence de l'alésage 60 et donc de la tige 59, un décalage relatif radial s'établit entre le centre du palpeur 13a et l'axe de la tige 59. Ce décalage se répercute au niveau de la partie 68 et est transformé en un déplacement axial par le renvoi d'angle constitué par la fourche 69, déplacement qui est mesuré par le comparateur 72. La mesure est effectuée suivant deux directions à angle droit, en utilisant les deux méplats 62 et 63.

La Figure 17 montre une variante de réalisation de l'appareil de contrôle de la Figure 14.

Les éléments de l'appareil de la Figure 17 jouant des rôles semblables à des éléments déjà décrits à propos de la Figure 14 sont désignés par des références numériques égales à la somme du nombre 100 et de la référence numérique utilisée sur la Figure 14. Leur description ne sera pas reprise, ou ne sera effectuée que succinctement.

La tige 159 est munie, à son extrémité inférieure, d'une touche sphérique 77 qui vient s'engager dans un alésage 160, de même diamètre que la sphère 77, du canon de référence 161.

L'enveloppe 156 est cylindrique et comporte, à l'intérieur, une bague à surface interne sphérique concave 78 bloquée axialement, autorisant la rotation de la sphère 166 autour de son centre A, mais empêchant tout déplacement en translation de la sphère 166 dans l'enveloppe 156. Le palpeur 113a, formé par une portion de sphère, est prolongé du côté opposé à la sphère 166, par un manchon cylindrique 79, coaxial à l'enveloppe 156, comportant à son extrémité inférieure un renflement 80 à surface extérieure sphérique centré sur l'axe géométrique du manchon 79. Le renflement 80 vient s'ajuster dans un alésage 81, de même diamètre, du canon 161. L'alésage 81 est situé entre la pièce la et l'autre alésage 160.

Du côté de la sphère 166 opposé à la touche 77, la tige 159 se prolonge par une partie cylindrique coaxiale 82 de plus fort diamètre. Le déplacement de l'extrémité supérieure de cette tige 82 est mesuré par un comparateur 172. Dans la représentation de la Figure 17 le comparateur 172 est disposé à angle droit par rapport à l'axe géométrique de l'enveloppe 156. Une disposition axiale semblable à la Figure 14 pourrait être prévue, avec un renvoi d'angle semblable à la fourche 69 pour transformer le déplacement radial de l'extrémité supérieure de la tige 82 en un déplacement axial.

L'égalité des bras de levier, décrite à propos de la Figure 14, n'est plus conservée dans le cas de la Figure 17. Il convient simplement d'en tenir compte au niveau des lectures ou d'introduire un facteur automatique de correction.

L'étalon de référence 174 pour l'appareil de la Figure 17 comprend un manchon avec un premier alésage 83 de diamètre égal à celui de la touche 77, un deuxième alésage 84 de diamètre égal à celui du renflement sphérique 80 et, en partie haute, un chanfrein tronconique 176 pour le palpeur 113a, toutes ces parties étant parfaitement concentriques. Lorsque l'appareil de contrôle de la Figure 17 est mis en place sur l'étalon 174, le comparateur 172 est réglé sur un décalage nul.

Une opération de contrôle s'effectue de la même manière que celle décrite à propos de la Figure 14. La pièce la est positionnée avec des moyens non représentés, et les canons de référence tels que 161 sont eux-mêmes maintenus dans les positions théoriques. L'opérateur engage, à travers le trou t la touche 77 et le manchon 79 de sorte que la touche 77 vienne se loger dans l'alésage 160 et le renflement 80 dans l'alésage 81, tandis que le palpeur 113a est appliqué contre le bord du trou t.

Un décalage entre la position du centre du trou t et l'axe géométrique du canon 161 se traduit par un déplacement latéral de l'extrémité supérieure de la tige 82, déplacement qui est mesuré par le comparateur 172.

## Revendications

1. Dispositif de contrôle de la position de points sur une pièce, notamment de centres de trous réalisés dans une pièce, en particulier une tôle, comprenant un palpeur (P) situé à une extrémité d'un élément (2;56;156) pour entrer en contact avec le point ou le bord du trou (t,t1...) à contrôler, et des moyens de repérage de la position du palpeur permettant de déduire la position du point contrôlé,
**caractérisé par le fait que** l'élément (2;56;156) portant le palpeur (P) est articulé, dans une zone intermédiaire (6;56a;78), sur un organe(3;59,66;159,166) propre à être engagé de manière amovible dans l'alésage (4260;160,81) d'un canon de guidage (5,61:161) installé dans une position de référence, une partie (16;56b;156b) de l'élément opposée au palpeur (P) coopérant avec un moyen de mesure (M) des déplacements de cette partie (16;56b;156b) relativement à l'organe (3,59,159).

2. Dispositif de contrôle selon la revendication 1, **caractérisé par le fait que** le palpeur (P) comporte, pour entrer en contact avec le point ou le bord d'un trou (t) à contrôler, une calotte sphérique (13;13a;113a).

3. Dispositif de contrôle selon la revendication 1 ou 2, **caractérisé par le fait que** l'élément portant le palpeur (P) est constitué par une tige (2), et l'organe sur lequel est articulée cette tige (2) est constitué par un manchon (3) propre à être engagé de manière amovible dans l'alésage (4) d'un canon de guidage (5), la tige (2) étant engagée en partie dans le manchon (3).

4. Dispositif de contrôle selon la revendication 3 , **caractérisé par le fait que** la tige (2) portant le palpeur (P) est montée coulissante dans le manchon (3) et est sollicitée élastiquement pour que le palpeur (P) s'applique contre le point ou le bord du trou (t) à contrôler.

5. Dispositif de contrôle selon la revendication 4, **caractérisé par le fait que** la tige (2) est sollicitée élastiquement par un ressort de compression (8) monté autour d'une partie de la tige (2) et prenant appui respectivement contre un élément (10,11) solidaire de la tige et contre une zone (7) du manchon de manière à pousser la tige (2) vers le point ou le bord du trou à contrôler.

6. Dispositif de contrôle selon l'une des revendications 3 à 5, **caractérisé par le fait que** l'articulation de la tige (2) comprend une portée (6) formée par une zone sphérique en saillie radiale autour de la tige, centrée sur l'axe géométrique de la tige (2) et propre à pivoter dans un alésage (7a), de même diamètre, du manchon (3).

7. Dispositif de contrôle selon la revendication 3, **caractérisé par le fait que** la partie de la tige (2) opposée au palpeur comporte une portée (16) en zone sphérique, en saillie radiale autour de cette tige, et en appui contre une touche (17) d'un appareil (M) de mesure du déplacement de cette portée (16) dans une direction.

8. Dispositif de contrôle selon la revendication 7, **caractérisé par le fait que** l'appareil de mesure (M) est constitué par un comparateur micrométrique (18) disposé de manière à mesurer les déplacements de la portée (16) suivant une direction orthogonale à l'axe de la tige (2).

9. Dispositif de contrôle selon la revendication 1 ou 2, **caractérisé par le fait que** l'organe (3; 59) est monté rotatif autour de son axe dans le canon (5;61) de guidage, et que des moyens de positionnement (24,25,26;62-65) entre l'organe et le: canon sont prévus pour permettre une mesure de contrôle dans deux directions (X-X, Y-Y), en particulier deux directions orthogonales.

10. Dispositif de contrôle selon l'ensemble des revendications 3 et 9, **caractérisé par le fait que** les moyens de positionnement comprennent sur le canon de guidage (5), un pion (26) décalé radialement par rapport à l'axe du canon et en saillie longitudinale, tandis que du côté du manchon (3) deux pattes (24,25) en saillie radiale, décalées angulairement, sont prévues et munies de portées (24a,25a) assurant, par coopération avec le pion (26) un changement de position angulaire, en particulier de 90°, du manchon (3) relativement au canon (5).

11. Dispositif de contrôle selon la revendication 3, **caractérisé par le fait qu'**il comprend un manchon auxiliaire (37), destiné à être monté dans le même canon de guidage (5), et muni d'une broche (38) décalée radialement mais parallèle à l'axe du manchon, cette broche (38) étant montée coulissante et sollicitée élastiquement pour palper la paroi entourant un trou (t) à contrôler, lorsque ce manchon auxiliaire (37) est monté dans le canon de guidage (5), des moyens de mesure des déplacements de la broche étant prévus pour permettre de déduire l'orientation de la surface de la paroi entourant le trou.

12. Dispositif de contrôle selon la revendication 3 , **caractérisé par le fait qu'**il comprend une jauge de référence (32) reproduisant la géométrie du dispositif de contrôle pour être montée dans le canon de guidage (5) et pour permettre de vérifier la position du canon avant d'entamer les opérations de contrôle.

13. Dispositif de contrôle selon la revendication 3, **caractérisé par le fait que** des moyens (46,47,55) sont prévus sur le manchon (3) pour limiter le pivotement de l'axe de la tige (2) dans un seul plan, en particulier pour le contrôle de trous oblongs (42).

14. Dispositif de contrôle selon la revendication 1 ou 2, **caractérisé par le fait que** l'élément portant le palpeur (P) est constitué par une enveloppe (56;156) munie, à une extrémité, du palpeur (P) traversé par un alésage (57;157), et l'organe sur lequel est articulé l'enveloppe (56;156) est constitué par une tige (59:159) traversant ledit alésage (57;157) pour pénétrer dans l'enveloppe, cette tige comportant à l'intérieur de l'enveloppe une sphère d'articulation (66;166) coopérant avec une surface conjuguée prévue à l'intérieur de l'enveloppe (56;156), l'extrémité (68, 168) de la tige située à l'intérieur de l'enveloppe coopérant avec un moyen de mesure (M,72,172) des déplacements relatifs, la tige (59;159) faisant saillie hors de l'enveloppe pour traverser un trou à contrôler, et s'engager dans l'alésage (60;160) d'un canon de référence (61;161) situé du côté de la pièce opposé au dispositif de contrôle.

15. Dispositif de contrôle selon la revendication 14, **caractérisé par le fait que** l'enveloppe (56) comporte une partie inférieure tronconique (56a) dont la petite base est solidaire d'une portion de sphère (13a) formant palpeur, et que des moyens (67) sont prévus pour maintenir la sphère (66) de la tige, située à l'intérieur de l'enveloppe, au contact de la surface tronconique interne de la partie inférieure (56a).

16. Dispositif de contrôle selon la revendication 14, **caractérisé par le fait que** l'enveloppe (156) est cylindrique et le palpeur (113a) est formé par une portion de sphère, solidaire de l'enveloppe, prolongée du côté opposé à l'enveloppe par un manchon cylindrique (79) coaxial à l'enveloppe, comportant à son extrémité éloignée de l'enveloppe un renflement (80) à surface extérieure sphérique, centrée sur l'axe géométrique du manchon, la tige (159) traversant ce manchon , faisant saillie au-delà et étant munie à son extrémité d'une touche sphérique (77).

17. Dispositif de contrôle selon l'une des revendication 14 à 16, **caractérisé par le fait qu'**un renvoi d'angle (69), notamment formé par une fourche en U renversé dont une extrémité latérale est articulée sur un pivot porté par l'enveloppe (56), est prévu dans cette enveloppe pour coopérer avec une extrémité (68) de la tige (59) et transformer un déplacement transversal en un déplacement suivant l'axe de la tige (59).

18. Dispositif de contrôle selon la revendication 1 ou 2, **caractérisé par le fait que** des moyens (21,49,74,174) sont prévus pour maintenir l'axe de l'élément (2,56,156) confondu avec celui de l'organe (3,59,159) pour une mise à zéro.

19. Dispositif de contrôle selon la revendication 1 ou 2, **caractérisé par le fait que** le palpeur (P) est constitué par un embout interchangeable (14, 48) monté à une extrémité (15) de l'élément (2).

## Patentansprüche

1. Vorrichtung zum Prüfen der Position von Punkten auf einem Werkstück, insbesondere von Mittelpunkten von Löchern, die in einem Werkstück, insbesondere einem Blech, ausgebildet sind, mit einem Taster (P), der an einem Ende eines Elements (2; 56; 156) zum Berühren des zu prüfenden Punkts oder des Randes des Lochs (t, t1) angeordnet ist, und mit Einrichtungen zur Ortsbestimmung des Tasters, welche es ermöglicht, die Position des geprüften Punkts abzuleiten,
**dadurch gekennzeichnet, daß** das den Taster (P) tragende Element (2; 56; 156) in einem Mittelbereich (6; 56a; 78) auf einem Element (3; 59, 66; 159, 166) gelenkig angeordnet ist, das lösbar in die Bohrung (4; 60; 160, 81) einer Führungshülse (5; 61; 161) einsetzbar ist, die in einer Referenzposition angebracht ist, wobei ein dem Taster (P) gegenüberliegender Bereich (16; 56b; 156b) des Elements mit einer Einrichtung (M) zum Messen von Verschiebungen dieses Bereichs (16; 56b; 156b) relativ zum Element (3; 59; 159) zusammenwirkt.

2. Prüfvorrichtung nach Anspruch 1, **dadurch gekennzeichnet, daß** der Taster (P) eine Kugelkalotte (13; 13a; 113a) aufweist, um den Punkt oder den Rand eines Lochs (t), die zu prüfen sind, zu berühren.

3. Prüfvorrichtung nach Anspruch 1 oder 2, **dadurch gekennzeichnet, daß** das den Taster (P) tragende Element aus einer Stange (2) besteht und das Element, auf dem die Stange (2) gelenkig angeordnet ist, durch eine Hülse (3) gebildet ist, die lösbar in die Bohrung (4) einer Führungshülse (5) einsetzbar ist, wobei die Stange (2) teilweise in die Hülse (3) eingesetzt ist.

4. Prüfvorrichtung nach Anspruch 3, **dadurch gekennzeichnet, daß** die den Taster (P) tragende Stange (2) gleitend verschiebbar in der Hülse (3) angebracht ist und elastisch vorgespannt ist, so daß derTaster (P) gegen den zu prüfenden Punkt oder den Rand des zu prüfenden Lochs (t) drückt.

5. Prüfvorrichtung nach Anspruch 4, **dadurch gekennzeichnet, daß** die Stange (2) durch eine Druckfeder (8) elastisch vorgespannt ist, die um einen Teil der Stange (2) angeordnet ist und sich jeweils an einem fest mit der Stange verbundenen Element (10, 11) und an einer Zone (7) der Hülse derart abstützt, daß sie die Stange (2) in Richtung des zu prüfenden Punkts oder des Randes des zu prüfenden Lochs drückt.

6. Prüfvorrichtung nach einem der Ansprüche 3 bis 5, **dadurch gekennzeichnet, daß** das Gelenk der Stange (2) eine Lagerfläche (6) aufweist, die aus einem radial vorstehenden sphärischen Bereich um die Stange besteht, der auf die geometrische Achse der Stange (2) zentriert ist und in einer Bohrung (7a) der Hülse (3) mit gleichem Durchmesser drehen kann.

7. Prüfvorrichtung nach Anspruch 3, **dadurch gekennzeichnet, daß** der dem Taster (P) gegenüberliegende Bereich der Stange (2) eine sphärische, radial vorstehende Lagerfläche (16) um die Stange aufweist, die an einem Schalter (17) einer Vorrichtung (M) zum Messen der Verschiebung dieser Lagerfläche (16) in eine Richtung anliegt.

8. Prüfvorrichtung nach Anspruch 7, **dadurch gekennzeichnet, daß** die Messvorrichtung (M) ein mikrometrischer Komparator (18) ist, der derart angeordnet ist, daß er die Verschiebungen der Lagerfläche (16) in einer zur Achse der Stange (2) orthogonalen Richtung mißt.

9. Prüfvorrichtung nach Anspruch 1 oder 2, **dadurch gekennzeichnet, daß** das Element (3; 59) um seine Achse drehbar in der Führungshülse (5; 61) angeordnet ist, und daß Positionierungseinrichtungen (24, 25, 26; 62-65) zwischen dem Element und der Führungshülse vorgesehen sind, um eine Prüfmessung in zwei Richtungen (X-X, Y-Y), insbesondere zwei orthogonale Richtungen zu ermöglichen.

10. Prüfvorrichtung nach den Ansprüchen 3 und 9, **dadurch gekennzeichnet, daß** die Positionierungseinrichtung auf der Führungshülse (5) einen Pion (26) aufweist, der in bezug zur Achse der Führungshülse radial versetzt ist und in Längsrichtung vorsteht, während auf der Seite der Hülse (3) zwei radial abstehende und winklig versetzte Ansätze (24,25) vorgesehen und mit Lagerflächen (24a, 25a) versehen sind, die durch Zusammenwirken mit dem Pion (26) eine Veränderung der Winkelpositioh der Hülse (3), insbesondere um 90°, relativ zur Führungshülse (5) gewährleisten.

11. Prüfvorrichtung nach Anspruch 3, **dadurch gekennzeichnet, daß** sie eine Zusatzhülse (37) aufweist, die zur Befestigung in derselben Führungshülse (5) vorgesehen und mit einem radial versetzten, jedoch parallel zur Achse der Hülse verlaufenden Stift (38) versehen ist, wobei der Stift (38) gleitend verschiebbar und elastisch vorgespannt ist, um die ein zu prüfendes Loch (t) umgebende Wand abzutasten, wenn die Zusatzhülse (37) in der Führungshülse (5) montiert ist, wobei Einrichtungen zum Messen der Verschiebung des Stifts vorgesehen sind, um die Ausrichtung der Fläche der das Loch umgebenden Wand abzuleiten.

12. Prüfvorrichtung nach Anspruch 3, **dadurch gekennzeichnet, daß** sie eine die Geometrie der Prüfvorrichtung reproduzierende/nachahmende Referenzmeßeinrichtung (32) aufweist, welche in die Führungshülse (5) eingesetzt wird und eine Verifizierung der Position der Führungshülse vor dem Durchführen der Prüfvorgänge ermöglicht.

13. Prüfvorrichtung nach Anspruch 3, **dadurch gekennzeichnet, daß** an der Hülse (3) Einrichtungen (46, 47, 55) vorgesehen sind, die das Schwenken der Achse der Stange (2) auf eine einzige Ebene beschränken, insbesondere zur Prüfung von Langlöchern (42).

14. Prüfvorrichtung nach Anspruch 1 oder 2, **dadurch gekennzeichnet, daß** das den Taster (P) tragende Element durch einen Mantel (56; 156) gebildet ist, der an einem Ende mit dem von einer Bohrung (57; 157) durchsetzten Taster (P) versehen ist, und daß das Element, auf dem der Mantel (56; 156) gelenkig angeordnet ist, durch eine Stange (59; 159) gebildet ist, welche die Bohrung (57; 157) durchquert, um in den Mantel einzutreten, wobei die Stange im Inneren des Mantels eine Gelenkkugel (66; 166) aufweist, die mit einer zugeordneten Fläche im Inneren des Mantels (56; 156) zusammenwirkt, wobei das im Inneren des Mantels befindliche Ende (68; 168) der Stange mit einer Einrichtung (M, 72, 172) zum Messen von relativen Verschiebungen zusammenwirkt, wobei die Stange (59; 159) aus dem Mantel ragt, um in ein zu prüfendes Loch einzudringen und in die Bohrung (60; 160) einer Referenzhülse (61; 161) einzutreten, die auf der der Prüfvorrichtung gegenüberliegenden Seite des Werkstücks angeordnet ist.

15. Prüfvorrichtung nach Anspruch 14, **dadurch gekennzeichnet, daß** der Mantel (56) einen kegelstumpfförmigen unteren Bereich (56a) aufweist, dessen kleine Basis fest mit einem den Taster bildenden Kugelabschnitt (13a) verbunden ist, und daß Einrichtungen (67) vorgesehen sind, welche die im Inneren des Mantels befindliche Kugel (66) der Stange in Kontakt mit der inneren kegelstumpfförmigen Fläche des unteren Bereichs (56a) halten.

16. Prüfvorrichtung nach Anspruch 14, **dadurch gekennzeichnet, daß** der Mantel (156) zylindrisch ist und der Taster (113a) aus einem fest mit dem Mantel verbundenen Kugelabschnitt besteht, der auf der dem Mantel gegenüberliegenden Seite durch eine zum Mantel koaxiale zylindrische Hülse (79) verlängert ist, die an ihrem dem Mantel abgewandten Ende eine Verdickung (80) mit sphärischer Außenfläche aufweist, die auf die geometrische Achse der Hülse zentriert ist, wobei die die Hülse durchsetzende Stange (159) über diese hinausragt und an ihrem Ende mit einem sphärischen Schalter (77) versehen ist.

17. Prüfvorrichtung nach einem der Ansprüche 14 bis 16, **dadurch gekennzeichnet, daß** eine Insbesondere als umgekehrt U-förmige Gabel, deren eines seitliches Ende gelenkig auf einem vom Mantel (56) getragenen Zapfen angeordnet ist:, ausgebildete Winkelvorgelegeeinrichtung (69) in dem Mantel vorgesehen ist, um mit einem Ende (68) der Stange (59) zusammenzuwirken und eine transversale Verschiebung in eine Verschiebung in Richtung der Achse der Stange (59) umzusetzen.

18. Prüfvorrichtung nach Anspruch 1 oder 2, **dadurch gekennzeichnet, daß** Einrichtungen (21, 49, 74, 174) vorgesehen sind, um die Achse des Elements (2, 56, 156) für die Nullstellung in Flucht mit derjenigen des Elements (3, 59, 159) zu halten.

19. Prüfvorrichtung nach Anspruch 1 oder 2, **dadurch gekennzeichnet, daß** der Taster (P) aus einem austauschbaren Ansatz (14, 48) besteht, der an einem Ende (15) des Elements (2) angebracht ist.

## Claims

1. Device for checking the position of points on a workpiece, particularly the position of the centres of holes made in a workpiece, particularly a metal sheet, comprising a feeler (P) situated at one end of an element (2; 56; 156) for coming into contact with the point or with the edge of the hole (t, t1,...) that is to be checked, and means for identifying the position of the feeler making it possible to deduce the position of the checked point,
**characterized in that** the element (2; 56; 156) carrying the feeler (P) is articulated, in an intermediate region (6; 56a; 78), to a member (3; 59, 66; 159, 166) capable of being engaged removably in the bore (4; 60; 160, 81) of a guide barrel (5; 61; 161) installed in a reference position, a part (16; 56b; 156b) of the element away from the feeler (P) collaborating with means (M) of measuring the displacements of this part (16; 56b; 156b) relative to the member (3; 59; 159).

2. Checking device according to Claim 1, **characterized in that** the feeler (P) comprises, for coming into contact with the point or the edge of a hole (t) that is to be checked, a spherical cup (13; 13a; 113a).

3. Checking device according to Claim 1 or 2, **characterized in that** the element carrying the feeler (P) consists of a rod (2), and the member to which this rod (2) is articulated consists of a sleeve (3) capable of being engaged removably in the bore (4) of a guide barrel (5), the rod (2) being partially engaged in the sleeve (3).

4. Checking device according to Claim 3, **characterized in that** the rod (2) carrying the feeler (P) is mounted to slide in the sleeve (3) and is elastically urged so that the feeler (P) is pressed against the point or against the edge of the hole (t) that is to be checked.

5. Checking device according to Claim 4, **characterized in that** the rod (2) is elastically urged by a compression spring (8) mounted around part of the rod (2) and bearing respectively against an element (10, 11) secured to the rod and against a region (7) of the sleeve so as to push the rod (2) towards the point or towards the edge of the hole that is to be checked.

6. Checking device according to one of Claims 3 to 5, **characterized in that** the articulation of the rod (2) comprises a bearing surface (6) formed of a spherical region projecting radially around the rod, centred on the geometric axis of the rod (2) and capable of pivoting in a bore (7a), of the same diameter, belonging to the sleeve (3).

7. Checking device according to Claim 3, **characterized in that** the part of the rod (2) away from the feeler has a bearing surface (16) in the form of a spherical region, projecting radially around this rod, and bearing against a probe key (17) of apparatus (M) for measuring the displacement of this bearing surface (16) in one direction.

8. Checking device according to Claim 7, **characterized in that** the measurement apparatus (M) consists of a micrometric comparator (18) arranged in such a way as to measure the displacements of the bearing surface (16) in a direction orthogonal to the axis of the rod (2).

9. Checking device according to Claim 1 or 2, **characterized in that** the member (3; 59) is mounted to rotate about its axis in the guide barrel (5; 61), and that means (24, 25, 26; 62-65) for the relative positioning of the member and of the barrel are provided to allow a checking measurement to be taken in two directions (X-X, Y-Y), particularly in two orthogonal directions.

10. Checking device according to the combination of Claims 3 and 9,
**characterized in that** the positioning means comprise, on the guide barrel (5), a peg (26) which is offset radially with respect to the axis of the barrel and projects longitudinally, while, on the sleeve (3), there are two angularly offset radially projecting tabs (24, 25) equipped with bearing surfaces (24a, 25a) which, by collaborating with the peg (26), allow a change in the angular position, particularly through 90°, of the sleeve (3) relative to the barrel (5).

11. Checking device according to Claim 3, **characterized in that** it comprises an auxiliary sleeve (37) intended to be mounted in the same guide barrel (5) and fitted with a spindle (38) which is offset radially but parallel to the axis of the sleeve, this spindle (38) being mounted slidably and urged elastically to feel the wall surrounding a hole (t) that is to be checked when this auxiliary sleeve (37) is mounted in the guide barrel (5), means being provided for measuring the displacements of the spindle so as to deduce the orientation of the surface of the wall surrounding the hole.

12. Checking device according to Claim 3, **characterized in that** it comprises a reference gauge (32) reproducing the geometry of the checking device, to be mounted in the guide barrel (5) and to make it possible to verify the position of the barrel before beginning the checking operations.

13. Checking device according to Claim 3, **characterized in that** means (46, 47, 55) are provided on the sleeve (3) for limiting the pivoting of the axis of the rod (2) in a single plane, particularly for checking oblong holes (42).

14. Checking device according to Claim 1 or 2, **characterized in that** the element carrying the feeler (P) consists of an envelope (56; 156) equipped, at one end, with the feeler (P) through which there passes a bore (57; 157), and the member to which the envelope (56; 156) is articulated consists of a rod (59; 159) passing through the said bore (57; 157) to enter the envelope, this rod inside the envelope comprising an articulation sphere (66; 166) collaborating with a conjugate surface provided inside the envelope (56; 156), the end (68, 168) of the rod situated inside the envelope collaborating with a means (M, 72, 172) of measuring relative displacements, the rod (59; 159) projecting out of the envelope to pass through a hole that is to be checked, and engaging in the bore (60; 160) of a reference barrel (61; 161) situated on the opposite side of the workpiece to the checking device.

15. Checking device according to Claim 14, **characterized in that** the envelope (56) comprises a frustoconical lower part (56a), the small base of which is secured to a portion of a sphere (13a) forming a feeler, and that means (67) are provided for keeping the sphere (66) of the rod, situated inside the envelope, in contact with the interior frustoconical surface of the lower part (56a).

16. Checking device according to Claim 14, **characterized in that** the envelope (156) is cylindrical and the feeler (113a) is formed of a portion of a sphere, secured to the envelope, extended on the opposite side to the envelope by a cylindrical sleeve (79) coaxial with the envelope, and comprising at its end remote from the envelope a bulge (80) of spherical exterior surface centred on the geometric axis of the sleeve, wherein the rod (159) passes through this sleeve, projects beyond it and being equipped at its end with a spherical probe key (77).

17. Checking device according to one of Claims 14 to 16, **characterized in that** a means (69) of transmitting at an angle, particularly formed of a fork in the shape of an inverted U one lateral end of which is articulated to a pivot carried by the envelope (56), is provided in this envelope to collaborate with one end (68) of the rod (59) and to convert a transverse displacement into a displacement along the axis of the rod (59).

18. Checking device according to Claim 1 or 2, **characterized in that** means (21, 49, 74, 174) are provided for keeping the axis of the element (2, 56, 156) coincident with that of the member (3, 59, 159) for resetting to zero.

19. Checking device according to Claim 1 or 2, **characterized in that** the feeler (P) consists of an interchangeable tip (14, 48) mounted at one end (15) of the element (2).
